# FASCICULE DE BREVET EUROPEEN

(11) **EP 3 943 577 B1**
(45) Date de publication et mention de la délivrance du brevet: **09.12.2026**
(21) Numéro de dépôt: 21184941.9
(22) Date de dépôt: 12.07.2021
(51) Int. Cl.: C10G 45/64, B01J 29/80

(54) **PROCÉDÉ DE DÉPARAFFINAGE D'UNE CHARGE DISTILLAT MOYEN UTILISANT UN CATALYSEUR À BASE DE ZÉOLITHE IZM-2 ET D'UNE ZÉOLITHE DE TYPE MFI**
VERFAHREN ZUR ENTPARAFFINIERUNG EINES MITTELDESTILLATMATERIALS UNTER VERWENDUNG EINES KATALYSATORS AUF DER BASIS VON IZM-2-ZEOLITH UND MFI-ZEOLITH
DEWAXING PROCESS OF A MIDDLE DISTILLATE FEEDSTOCK USING A CATALYST MADE OF IZM-2 ZEOLITE AND AN MFI TYPE ZEOLITE

(30) Priorité: 23.07.2020 FR 2007730
(43) Date de publication de la demande: 26.01.2022
(73) Titulaire: IFP Energies nouvelles, 92500 Rueil-Malmaison (FR)
(72) Inventeur: DIGNE, Mathieu, 92852 RUEIL-MALMAISON CEDEX (FR); FECANT, Antoine, 92852 RUEIL-MALMAISON CEDEX (FR); BERTRAND-DRIRA, Chloé, 92852 RUEIL-MALMAISON CEDEX (FR)
(74) Mandataire: IFP Energies nouvelles

(56) Documents cités:
- EP-A1- 0 785 021
- EP-A1- 2 781 497
- WO-A1-2014/177429
- FR-A1- 2 852 865
- FR-A1- 2 989 382

## Description

### DOMAINE DE L'INVENTION

La présente invention concerne un procède de déparaffinage d'une charge distillats moyens, pour convertir, des charges possédant des points d'écoulement élevés en au moins une coupe présentant un point d'écoulement amélioré avec un bon rendement.

Ledit procédé est mis en œuvre avec au moins un catalyseur comprenant au moins une phase hydro-deshydrogénante contenant au moins un métal du groupe VIB et au moins un métal du groupe VIII de la classification périodique des éléments, et un support comprenant au moins une zéolithe IZM-2, au moins une zéolithe de code structural MFI et un liant.

### ETAT DE LA TECHNIQUE

Le traitement des fractions pétrolières de type distillats moyens, c'est à dire d'une charge comprenant au moins 95% en poids de composes bouillants a une température d'ébullition comprise entre 150 et 400°C et de préférence entre 150 et 380°C, lesdites charges présentant de fortes teneurs en paraffines linéaires ou peu ramifiées, est nécessaire afin d'obtenir des produits de bonne qualité qui seront ensuite utilisés en tant que carburant gazole ou en tant que kérosène ou carburéacteur (jet fuel). Ce traitement consiste à modifier les paraffines linéaires ou très peu branchées et ce avec les meilleurs rendements possibles en distillat moyen.

En effet, les paraffines de haut poids moléculaire qui sont linéaires ou très faiblement branchées et qui sont présentes dans les distillats moyens (gazole et kérosène) conduisent à des points d'écoulement hauts et donc à des phénomènes de figeage pour des utilisations à basse température. Afin de diminuer les valeurs des points d'écoulement, ces paraffines linéaires pas ou très peu branchées doivent être entièrement ou partiellement éliminées.

Le craquage sélectif des chaines paraffiniques linéaires les plus longues qui conduit à la formation de composes de poids moléculaire plus faible dont une partie peut être éliminée par distillation constitue une solution pour diminuer les valeurs des points d'écoulement. Compte tenu de leur sélectivité de forme les zéolithes sont parmi les catalyseurs les plus utilisés pour ce type de procédé. Le catalyseur le plus utilisé dans la catégorie du déparaffinage par craquage sélectif est la zéolithe ZSM-5, de code structural MFI, qui présente une porosité tridimensionnelle, avec des pores moyens (ouverture a 10 atomes d'oxygènes 10MR). Toutefois, le craquage occasionné dans de tels procédés conduit à la formation de quantités importantes de produits de poids moléculaires plus faibles, tels que du butane, propane, éthane et méthane, ce qui réduit considérablement le rendement en produits recherchés.

Une autre solution pour améliorer la tenue à froid d'une coupe pétrolière consiste à isomériser les paraffines linéaires présentes en minimisant au maximum le craquage. La sélectivité de forme des zéolithes monodimensionnelles à pores moyens (10MR) comme les zéolithes ZSM-22, ZSM-23, NU-10, ZSM-48, ZBM-30 permet d'isomériser les charges en minimisant les réactions de craquage, ce qui permet d'augmenter ainsi la sélectivité en produits recherchés.

En outre, il est connu de la demande de brevet WO2013/153318 d'utiliser un catalyseur comprenant la zéolithe IZM-2, et éventuellement une zéolithe choisie parmi les zéolithes de structure FER, BEA, TON, MRE, FAU, AEI, AFO, et de manière encore plus préférée parmi les zéolithes ferriérite, beta, ZSM-48, ZSM-22, ZBM-30, Y, USY, NU-86, SAPO-11 et SAPO-18 pour hydrotraiter et déparaffiner une charge distillats moyens possédant un haut point d'écoulement pour produire un produit possédant un point d'écoulement plus bas, et ce avec les meilleurs rendements possibles en produits recherchés.

WO2013/153317 décrit l'utilisation d'un catalyseur comprenant la zéolithe IZM-2, et éventuellement au moins une autre zéolithe choisie parmi les zéolithes de structure FER, BEA, TON, MRE, FAU, AEI, AFO, et de manière plus préférée parmi les zéolithes ferriérite, beta, ZSM-48, ZSM-22, ZBM-30, Y, USY, NU-86, SAPO-1 1 et SAPO-18, dans un procédé de déparaffinage d'une charge hydrocarbonée contenant une teneur en soufre inférieure à 300 ppm et contenant au moins 95% poids de composés bouillant à une température comprise entre 150 et 550°C.

De manière surprenante, la demanderesse a découvert que l'utilisation d'un catalyseur comportant une combinaison d'au moins une zéolithe IZM-2 ayant une activité isomérisante et d'au moins une zéolithe de code structural MFI ayant une activité craquante dans un procédé de déparaffinage d'une charge distillats moyens, permet d'abaisser le point d'écoulement de ladite charge de manière importante, tout en maintenant un rendement amélioré en produits désirés, par rapport à des catalyseur comprenant une zéolithe ou une combinaison de zéolithes isomérisantes seules, ou une zéolithe ou une combinaison de zéolithe craquantes seules.

### OBJETS DE L'INVENTION

Un objet de l'invention est de fournir un procédé de déparaffinage d'une charge distillats moyens, mettant en œuvre dans un réacteur à lit fixe au moins un catalyseur comprenant au moins une phase hydro-deshydrogenante contenant au moins un métal du groupe VIB et au moins un métal du groupe VIII de la classification périodique des éléments, et un support comprenant au moins une zéolithe IZM-2, une zéolithe de code structural MFI et un liant, ledit procédé opérant à une température comprise entre 170 et 500°C, a une pression comprise entre 0,1 et 25 MPa, a une vitesse spatiale horaire comprise entre 0,05 et 50 h⁻¹ et en présence d'une quantité totale d'hydrogène mélangée à la charge telle que le ratio hydrogène/charge soit compris entre 50 et 2000 normaux litres d'hydrogène par normaux litre de charge.

Un avantage du procédé selon l'invention est de convertir une charge distillats moyens possédant un haut point d'écoulement en un produit possédant un point d'écoulement plus bas, et ce avec une activité élevée et les meilleurs rendements possibles en produits désirés.

La Demanderesse a découvert de manière surprenante que l'utilisation d'un catalyseur comportant une combinaison d'au moins une zéolithe IZM-2 isomérisante et d'au moins une zéolithe de code structural MFI craquante dans un procédé de déparaffinage d'une charge distillats moyens, permet un effet de synergie améliorant significativement la sélectivité par rapport à l'emploi d'un catalyseur comprenant une zéolithe ou une combinaison de zéolithes craquantes seules, et améliorant significativement l'activité par rapport à l'emploi d'un catalyseur comprenant une zéolithe ou une combinaison de zéolithe isomérisante seules. Ledit procédé permet donc d'obtenir des performances améliorées par rapport aux procédés divulgués dans l'art antérieur.

Sans vouloir être lié par une quelconque théorie, il se pourrait que le craquage des n-paraffines soit favorisé par rapport au craquage des iso-paraffines (composés ramifiés) par la contrainte stérique apportée par une association judicieuse de zéolithes fonctionnant simultanément dans les conditions opératoires sélectionnées, ceci permettrait ainsi que l'isomérat formé ne subisse pas de craquage de manière significative et permettent d'obtenir des catalyseurs présentant une forte activité et un sélectivité élevée en produit d'intérêt.

### DESCRIPTION DETAILLEE DE L'INVENTION

### Définitions

Dans la suite, les groupes d'éléments chimiques sont donnés selon la classification CAS (CRC Handbook of Chemistry and Physics, éditeur CRC press, rédacteur en chef D.R. Lide, 81^{ème} édition, 2000-2001). Par exemple, le groupe VIII selon la classification CAS correspond aux métaux des colonnes 8, 9 et 10 selon la nouvelle classification IUPAC.

On entend par surface spécifique, la surface spécifique BET (S_{BET} en m²/g) déterminée par adsorption d'azote conformément à la norme ASTM D 3663-78 établie à partir de la méthode BRUNAUER-EMMETT-TELLER décrite dans le périodique "The Journal of American Society", 1938, 60, 309.

On entend par volume poreux total du catalyseur ou du support utilisé pour la préparation du catalyseur le volume mesuré par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage « Techniques de l'ingénieur, traité analyse et caractérisation », pages 1050-1055, écrit par Jean Charpin et Bernard Rasneur. Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Les teneurs en métaux du groupe VIII et du groupe VIB sont mesurées par fluorescence X.

La perte au feu (ou PAF) d'un solide est la perte de masse relative (exprimée en %) d'un solide lorsque celui-ci a été porté à 1000°C pendant 3 h dans un four à moufle.

On entend par propriété à froid ou point d'écoulement du distillat moyens (kérosène ou du gazole) toute propriété dont la mesure est normalisée et servant à définir les spécifications de tenue à froid pour les carburants commerciaux selon les zones géographiques : point de trouble, point d'écoulement, température limite de filtration pour les gazoles, « freezing point » pour le jet fuel.

### Procédé de déparaffinage

La charge distillats moyens traitée dans le procédé selon l'invention comprend au moins 95% poids de composés bouillants a une température d'ébullition comprise entre 150 et 450°C, de préférence entre 150 et 400°C. Alternativement, la charge est définie par une température moyenne pondérée (TMP) comprise entre 280°C et 350°C. La TMP est définie à partir de la température à laquelle distillent 5%, 50% et 70% du volume de la charge selon la formule suivante : TMP = (T 5% + 2 x T 50% + 4 x T 70%)/ 7. La TMP est calculée à partir de valeurs de distillation simulée ou de la distillation ASTM D86.

La charge distillats moyens traitée dans le procédé selon l'invention est avantageusement une charge possédant un point d'écoulement relativement haut dont on désire diminuer la valeur. Une charge distillats moyens typique qui peut être traitée dans le procédé selon l'invention possède un point d'écoulement au-dessus de -10°C. Le procédé selon la présente invention permet la production de produits présentant des points d'écoulement inférieurs à 0°C et de préférence inferieurs à -10°C.

De préférence, ladite charge distillats moyens traitée dans le procédé selon l'invention est avantageusement issue de la distillation directe d'un pétrole brut (ou straight run selon la terminologie anglosaxonne).

Ladite charge peut également avantageusement être issue d'une unité de cokéfaction (coking selon la terminologie anglo-saxonne), d'une unité de viscoréduction (visbreaking selon la terminologie anglo-saxonne), d'une unité de vapocraquage (steam cracking selon la terminologie anglo-saxonne) et/ou d'une unité de craquage catalytique (Fluid Catalytic Cracking selon la terminologie anglo-saxonne). Ladite charge peut également avantageusement provenir d'une unité de transformation de la biomasse ou d'une huile d'origine végétale ou animale. Lesdites charges peuvent être prises seules ou en mélange. Ladite charge peut également avantageusement provenir d'une unité de recyclage chimique, et notamment de pyrolyse, de déchets plastiques.

Ladite charge distillats moyens contient généralement des paraffines, des oléfines, des naphtènes, des aromatiques et des composés azotés, soufrés et oxygénés organiques. Ladite charge contient une teneur en paraffines avantageusement supérieure à 10% en poids et de préférence supérieure à 20% en poids.

De préférence, ladite charge subit une étape d'hydrotraitement catalytique avant la mise en œuvre dans le procédé de déparaffinage selon l'invention. Ladite étape d'hydrotraitement est avantageusement mise en œuvre dans les mêmes conditions opératoires de température et de pression que le procédé de déparaffinage selon l'invention.

Les catalyseurs d'hydrotraitement qui peuvent être utilisés sont des catalyseurs d'hydrotraitement classiques connus de l'homme du métier. En particulier, lesdits catalyseurs comprennent au moins un métal du groupe VIII, au moins un métal du groupe VIB et au moins un support formé d'au moins un oxyde. De préférence la phase active des catalyseurs d'hydrotraitement est constituée d'une phase sulfure "mixte" constituée par des feuillets de disulfure de molybdène (respectivement de tungstène) décorés par des atomes de promoteur (cobalt ou nickel, le plus souvent) en périphérie...

Dans ce mode préféré, ladite charge distillats moyens traitée selon le procédé de l'invention contient une teneur en composés soufrés avantageusement comprise 0 ppm et 100ppm en poids de soufre, de préférence comprise entre 1 ppm et 50 ppm en poids de soufre, et contient une teneur en composés azotés comprise entre 0 ppm et 100 ppm en poids d'azote, avantageusement comprise entre 0 ppm et 20 ppm en poids d'azote. Cette étape amont d'hydrotraitement peut avantageusement être effectuée dans le même réacteur que le procédé de déparaffinage selon l'invention ou dans un réacteur séparée, et la charge peut avoir subi ou pas une opération de stripping du H₂S et du NH₃ dissouts.

Conformément à l'invention, ledit procédé de déparaffinage opère à une température comprise entre 200°C et 500°C, de préférence entre 250°C et 440°C, à une pression comprise entre 0,1 et 25 MPa, de préférence entre 1 et 20 MPa, à une vitesse spatiale horaire comprise entre 0,05 h⁻¹ et 50 h⁻¹ de préférence entre 0,1 h⁻¹ et 20 h⁻¹ et de manière encore plus préférée entre 0,1 h⁻¹ et 10 h⁻¹ et en présence d'une quantité totale d'hydrogène mélangée a la charge telle que le ratio hydrogène/charge soit compris entre 50 et 2000 normaux litres d'hydrogène par litre de charge et de préférence entre 100 et 1500 normaux litres d'hydrogène par litre de charge.

Le procédé de déparaffinage en une étape selon la présente invention opérant dans les conditions ci-dessus permet de convertir une charge distillats moyens possédant un haut point d'écoulement en un produit possédant un point d'écoulement plus bas, et ce avec les meilleurs rendements possibles en produits désirés et une activité élevée.

### Catalyseur

Conformément à l'invention, le procédé de déparaffinage selon l'invention met en œuvre au moins un catalyseur comprenant au moins une phase hydro-deshydrogenante contenant au moins un métal du groupe VIB et au moins un métal du groupe VIII de la classification périodique des éléments, et un support comprenant au moins une zéolithe IZM-2, une zéolithe de code structural MFI et au moins un liant.

De préférence, ledit catalyseur contient une teneur en zéolithe totale (zéolithe IZM-2 et zéolithe de code structural MFI) comprise entre 5% et 90% en poids par rapport à la masse totale dudit catalyseur, et de manière préférée entre 20% et 80% en poids et de manière très préférée entre 30 et 80% poids.

De préférence, ledit catalyseur contient 2,5% à 50% en poids de phase active exprimée sous forme oxyde, et de manière très préférée de 3,0% à 36%.

De préférence, ledit catalyseur contient 0,5% à 10% en poids en métal du groupe VIII exprimé sous forme oxyde, de manière préférée entre 1 et 8% en poids d'oxyde et de manière très préférée entre 1 et 6% en poids d'oxyde.

De préférence, ledit catalyseur contient 2% à 40% en poids en métal du groupe VIB exprimé sous forme oxyde, de manière préférée entre 3 et 35% en poids d'oxyde et de manière très préférée entre 5 et 30% en poids d'oxyde.

De préférence, ledit catalyseur comprend une teneur en liant comprise entre 10% et 95% poids, et de manière préférée entre 20% et 80% en poids par rapport à la masse totale dudit catalyseur et de manière très préférée entre 20 et 70% poids.

### La fonction hydro/deshydrogénante

De préférence, les éléments du groupe VIII sont choisis parmi le fer, le cobalt, le nickel, pris seuls ou en mélange et de manière préférée les éléments du groupe VIII sont choisis parmi le nickel et le cobalt. De préférence, les éléments du groupe VIB sont choisis parmi le tungstène et le molybdène, pris seuls ou en mélange. Les associations de métaux suivants sont préférées : nickel-molybdène, cobalt-molybdène, nickel-tungstène, cobalt-tungstène, et de manière très préférée : nickel-molybdène, nickel-tungstène. Il est également possible d'utiliser des associations de trois métaux telles que par exemple nickel-cobalt-molybdène.

La teneur en élément du groupe VIII est avantageusement comprise entre 0,5 et 10% en poids d'oxyde par rapport à la masse totale dudit catalyseur, de manière préférée entre 0,5 et 8% en poids d'oxyde et de manière très préférée entre 1 et 6% en poids d'oxyde. La teneur en métal du groupe VIB est avantageusement comprise entre 1 et 40% en poids d'oxyde par rapport à la masse totale dudit catalyseur, de manière préférée entre 2 et 35% en poids d'oxyde et de manière très préférée entre 5 et 30% en poids d'oxyde.

De manière préférée, le catalyseur mis en œuvre selon l'invention contient également du phosphore. Lorsque le catalyseur contient du phosphore, la teneur en phosphore est avantageusement comprise entre 0,5 et 15% en poids d'oxyde P₂O₅ par rapport à la masse totale dudit catalyseur, de manière préférée comprise entre 1 et 10% en poids d'oxyde.

Le catalyseur a été obtenu par imprégnation du support. Toute méthode connue de l'homme du métier pourra être utilisée pour réaliser cette étape d'imprégnation. De manière préférée, elle aura été effectuée par une méthode d'imprégnation à sec par une solution contenant les précurseurs de la fonction hydro/déshydrogénante.

Le catalyseur mis en œuvre selon l'invention est préférentiellement utilisé sous une forme sulfurée. Toute méthode connue de l'homme du métier pourra être utilisée pour obtenir le catalyseur sous forme sulfurée.

### Le support

Le catalyseur mis en œuvre dans le procédé selon l'invention comprend un support comprenant au moins une zéolithe IZM-2, au moins une zéolithe de code structural MFI et un liant.

De manière préférée, le support du catalyseur utilisé dans l'invention présente un volume poreux total mesuré par porosimétrie au mercure compris entre 0,1 et 1 cm³/g et préférentiellement compris entre 0,3 et 0,9 cm³/g.

La surface spécifique du support est de préférence comprise entre 100 m²/g et 500 m²/g, et de manière plus préférée comprise entre 200 m²/g et 400 m²/g.

Le support est mis en forme sous la forme de grains de différentes formes et dimensions. Ils sont utilisés en général sous la forme d'extrudés cylindriques ou polylobes tels que, trilobes, quadrilobes ou polylobes de forme droite ou torsadée, mais peuvent éventuellement être fabriqués et employés sous la forme de poudres concassées, de tablettes, d'anneaux, de billes, de roues. Il est toutefois avantageux que le catalyseur se présente sous forme d'extrudés d'un diamètre compris entre 0,5 et 5 mm et plus particulièrement entre 1 et 3 mm. Les formes sont cylindriques (qui peuvent être creuses ou non), cylindriques torsades, multilobées (2, 3, 4 ou 5 lobes par exemple), anneaux. La forme cylindrique est avantageusement utilisée de manière préférée, mais toute autre forme peut avantageusement être utilisée.

De préférence, ledit support contient une teneur en zéolithe totale (zéolithe IZM-2 et zéolithe de code structural MFI) comprise entre 10% et 90% en poids par rapport à la masse totale dudit support, de manière préférée entre 30% et 80% en poids et de manière très préférée entre 40 et 80% poids.

De préférence, le ratio massique de la zéolithe IZM-2 sur la zéolithe de code structural MFI et de préférence la zéolithe ZSM-5 dans le support est compris entre 0,25 et 9 et de manière très préférée entre 0,3 et 6.

### La zéolithe IZM-2

Conformément à l'invention, ledit catalyseur comprend un support comprenant au moins une zéolithe IZM-2, au moins une zéolithe de code structural MFI et au moins un liant.

La zéolithe IZM-2 est un solide microporeux cristallisé présentant une structure cristalline décrite dans la demande de brevet FR 2 918 050. Le procédé de préparation de la zéolithe IZM-2 est également décrit dans ladite demande.

Ledit solide IZM-2 présente une composition chimique exprimée sur une base anhydre, en termes de moles d'oxydes, définie par la formule générale suivante: XO₂ : aY₂O₄ : bM_{2/n}O, dans laquelle X représente au moins un élément tétravalent, Y représente au moins un élément trivalent et M est au moins un métal alcalin et/ou un métal alcalino-terreux de valence n.

X est préférentiellement choisi parmi le silicium, le germanium, le titane et le mélange d'au moins deux de ces éléments tétravalents, très préférentiellement X est le silicium et Y est préférentiellement choisi parmi l'aluminium, le bore, le fer, l'indium et le gallium, très préférentiellement Y est l'aluminium. M est préférentiellement choisi parmi le lithium, le sodium, le potassium, le calcium, le magnésium et le mélange d'au moins deux de ces métaux et très préférentiellement M est le sodium. De manière préférée, X représente le silicium, le solide cristallise IZM-2 selon l'invention est alors un solide entièrement silicique lorsque l'élément Y est absent de la composition dudit solide IZM-2. Il est également avantageux d'employer comme élément X un mélange de plusieurs éléments, en particulier un mélange de silicium avec un autre élément X choisi parmi le germanium et le titane, de préférence le germanium. Ainsi, lorsque le silicium est présent en mélange avec un autre élément X, le solide cristallise IZM-2 selon l'invention est alors un métallosilicate cristallisé présentant un diagramme de diffraction des rayons X identique à celui décrit dans le tableau 1 du brevet FR 2 918 050 lorsqu'il se trouve sous sa forme calcinée. De manière encore plus préférée et en présence d'un élément Y, X étant le silicium et Y étant l'aluminium : le solide cristallise IZM-2 selon l'invention est alors un aluminosilicate. De préférence, la zéolithe IZM-2 est sous forme aluminosilicate.

De préférence, le rapport molaire du nombre d'atomes de silicium sur le nombre d'atomes d'aluminium Si/Al est inferieur a 200, de préférence inferieur a 150, de manière très préférée inferieur a 120.

La zéolithe IZM-2 entrant dans la composition du support du catalyseur selon l'invention est avantageusement échangée par au moins un traitement par une solution d'au moins un sel d'ammonium de manière à obtenir la forme ammonium de la zéolithe IZM-2 qui une fois calcinée conduit à la forme acide (H⁺) de ladite zéolithe IZM-2. Cette étape d'échange peut être effectuée à toute étape de la préparation du catalyseur, c'est-à-dire après l'étape de préparation de la zéolithe IZM-2, après l'étape de mise en forme de la zéolithe IZM-2 et de la zéolithe de code structural MFI par un liant minéral poreux, ou encore après l'étape d'introduction de la phase hydro-déshydrogenante.

Ladite zéolithe IZM-2 entrant dans la composition du support du catalyseur utilisé dans le procédé selon l'invention est avantageusement au moins en partie, de préférence pratiquement totalement, sous forme acide, c'est-à-dire sous forme H⁺.

### La zéolithe de code structural MFI

Conformément à l'invention, ledit catalyseur comprend un support comprenant au moins une zéolithe IZM-2, au moins une zéolithe de code structural MFI et un liant.

Les zéolithes de type structural MFI sont des solides microporeux cristallisés et ont été décrites dans la littérature (G.T. Kokotailo, S.L. Lawton, D.H. Olson, W.M. Meier, Nature, vol. 272, p. 437-438, 1978 ; D.H. Olson, G.T Kokotailo, S.L. Lawton, W.M. Meier, J. Phys. Chem., vol. 85, p. 2238-2243, 1981 ; H. van Koningsveld, J. C. Jansen, H. van Bekkum, Zeolites, vol. 10, p. 235-242, 1990). La structure cristalline de ces matériaux est décrite dans les documents « Collection of simulated XRD powder patterns for zeolites », Ed. M.M.J. Treacy and J.B. Higgins, Fifth Revised Edition, 2007, p. 280-281 et "Atlas of zeolite framework types", C. Baerlocher, L.B. McCusker, D.H. Olson, Sixth Revised Edition, 2007, p. 212-213.

Les procédés de préparation des zéolithes de code structural MFI sont également décrits dans lesdits documents.

Ladite zéolithe de code structural MFI présente une composition chimique exprimée sur une base anhydre, en termes de moles d'oxydes, définie par la formule générale suivante : (96-a) XO₂ : a/2 Y₂O₅ : a/2 M_{2/n}O, dans laquelle X représente au moins un élément tétravalent, Y représente au moins un élément trivalent, M est au moins un métal alcalin et/ou un métal alcalino-terreux de valence n, et x < 27.

X est préférentiellement choisi parmi le silicium, le germanium, le titane et le mélange d'au moins deux de ces éléments tétravalents, très préférentiellement X est le silicium et Y est préférentiellement choisi parmi l'aluminium, le bore, le fer, l'indium et le gallium, très préférentiellement Y est l'aluminium. M est préférentiellement choisi parmi le lithium, le sodium, le potassium, le calcium, le magnésium et le mélange d'au moins deux de ces métaux et très préférentiellement M est le sodium. De manière préférée, X représente le silicium, ladite zéolithe de code structural MFI selon l'invention est alors un solide entièrement silicique lorsque l'élément Y est absent de la composition de ladite zéolithe de code structural MFI. Il est également avantageux d'employer comme élément X un mélange de plusieurs éléments, en particulier un mélange de silicium avec un autre élément X choisi parmi le germanium et le titane, de préférence le germanium. Ainsi, lorsque le silicium est présent en mélange avec un autre élément X, ladite zéolithe de code structural MFI selon l'invention est alors un métallosilicate cristallisé présentant un diagramme de diffraction des rayons X identique à celui décrit dans « Collection of simulated XRD powder patterns for zeolites », Ed. M.M.J. Treacy and J.B. Higgins, Fifth Revised Edition, 2007, p. 280-281 lorsqu'il se trouve sous sa forme calcinée. De manière encore plus préférée et en présence d'un élément Y, X étant le silicium et Y étant l'aluminium : ladite zéolithe de code structural MFI selon l'invention est alors un aluminosilicate. De préférence, ladite zéolithe de code structural MFI selon l'invention est sous forme aluminosilicate.

De manière préférée, la zéolithe de code structural MFI est la ZSM-5.

De préférence, le rapport molaire du nombre d'atomes de silicium sur le nombre d'atomes d'aluminium Si/Al est inferieur a 100, de préférence inferieur a 70, de manière très préférée inferieur a 50.

La zéolithe de code structural MFI entrant dans la composition du support du catalyseur selon l'invention est avantageusement échangée par au moins un traitement par une solution d'au moins un sel d'ammonium de manière à obtenir la forme ammonium de la zéolithe de code structural MFI qui une fois calcinée conduit à la forme acide (H⁺) de ladite zéolithe de code structural MFI. Cette étape d'échange peut être effectuée à toute étape de la préparation du catalyseur, c'est-à-dire après l'étape de préparation de la zéolithe de code structural MFI, après l'étape de mise en forme de la zéolithe IZM-2 et de la zéolithe de code structural MFI par un liant minéral poreux, ou encore après l'étape d'introduction de la phase hydro-déshydrogenante.

Ladite zéolithe de code structural MFI entrant dans la composition du support du catalyseur utilisé dans le procédé selon l'invention est avantageusement au moins en partie, de préférence pratiquement totalement, sous forme acide, c'est-à-dire sous forme H⁺.

### Le liant

Selon l'invention, le support du catalyseur utilisé dans le procédé selon l'invention contient un liant. Ledit liant peut avantageusement être amorphe ou cristallisé. De préférence, ledit liant est avantageusement choisi dans le groupe formé par les oxydes suivants ou leurs formes hydratées : l'alumine, la silice, la silice-alumine, les argiles, l'oxyde de titane, l'oxyde de bore et la zircone, pris seuls ou en mélange. De préférence, ledit liant du support est l'alumine ou une hydroxyde d'aluminium, seul ou en mélange. De manière préférée, ledit liant du support est de l'alumine sous toutes ses formes connues de l'homme du métier, telles que par exemple les alumines de type alpha, gamma, êta, delta ou les hydroxydes, telles que boehmite, bayerite ou gibbsite. Lesdites alumines diffèrent par leur surface spécifique et leur volume poreux. La perte au feu du liant est avantageusement supérieure à 15%.

De préférence, ledit support comprend de 10% à 90% poids de liant, et de manière préférée de 20% à 70% en poids et de manière très préférée entre 20% et 60% en poids par rapport à la masse totale dudit support.

### Préparation du catalyseur

### Mise en forme du support IZM-2 / zéolithe MFI / liant

Le support du catalyseur utilisé dans le procédé selon l'invention peut avantageusement être préparé selon toutes les méthodes bien connues de l'homme du métier.

Selon un mode de préparation préfère, lesdites zéolithes cristallisées IZM-2 et de code structural MFI et liant(s) peuvent être introduites, sans que cela soit limitatif, sous forme de poudre, poudre broyée, suspension, suspension ayant subi un traitement de desagglomération. Lesdites zéolithes cristallisées et liants peuvent avantageusement avoir été préalablement mélangées (par exemple, par mélange mécanique ou par mise en suspension en présence d'un acide ou non) à une concentration ajustée à la teneur finale en zéolithes et en liant visée dans le catalyseur utilisé selon la présente invention.

Le support du catalyseur utilisé dans le procédé selon l'invention peut avantageusement être mis en forme par toute technique connue de l'homme du métier. La mise en forme peut avantageusement être réalisée par exemple par malaxage-extrusion, par pastillage, par la méthode de la coagulation en goutte ("oil-drop"), par granulation au plateau tournant ou par toute autre méthode bien connue de l'homme du métier.

La mise en forme peut avantageusement être réalisée par malaxage en présence des différents constituants du catalyseur pour former une pâte minérale, suivie de l'extrusion de la pâte obtenue. De l'eau est introduite lors de l'étape de malaxage, de manière à ce que la perte au feu de la pâte soit comprise en 0 et 100%, de manière préférée en 20 et 80%, de manière très préférée entre 30 et 70%.

L'étape de malaxage peut être réalisée avantageusement en introduisant un taux d'acide total, exprimé en pourcentage par rapport à la masse de liant séché introduit compris entre 0 et 10%poids (malaxage acide) puis en introduisant un taux de neutralisation exprimé en pourcentage poids de base par rapport à la quantité d'acide introduit précédemment compris entre 0 et 200% (malaxage basique). De préférence, le taux d'acide total, exprimé en pourcentage par rapport à la masse de liant séché, est compris entre 0 et 6% de manière très préférée entre 0 et 4%. De préférence, le taux de neutralisation exprimé en pourcentage poids de base par rapport à la quantité d'acide est compris entre 0 et 100%, de préférence entre 0 et 40%.

De préférence, l'acide utilisé est choisi parmi l'acide nitrique et les acides carboxyliques choisis de préférence parmi l'acide acétique, l'acide citrique et l'acide butyrique et de préférence l'acide nitrique. De préférence la base utilisée est choisie parmi les bases inorganiques choisies parmi la soude, la potasse, et l'ammoniaque, et les bases organiques en solution choisies parmi les amines et les composés ammonium quaternaire. De manière préférée les bases organiques en solution sont choisies parmi les alkyl-éthanol amines et les alkyl- amines éthoxylées. Les bases organiques sont de préférence utilisées en solution dans l'eau. De manière très préférée, ladite base est l'ammoniaque et de préférence l'ammoniaque en solution aqueuse (NH₄OH).

Tout additif connu de l'homme du métier pour faciliter la formation de la pâte, son homogénéisation et la formation du support lors de l'extrusion. A titre d'exemples d'additifs, on peut citer notamment la cellulose, la carboxy-methyl-cellulose, la carboxy-ethyl-cellulose, du tall-oil, les gommes xanthaniques, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyethylènes glycols, etc.

L'extrusion peut avantageusement être réalisée par n'importe quel outil conventionnel, disponible commercialement. La pâte issue du malaxage est avantageusement extrudée à travers une filière, par exemple à l'aide d'un piston ou d'une mono-vis ou double vis d'extrusion. Cette étape d'extrusion peut avantageusement être réalisée par toute méthode connue de l'homme de métier.

### Traitement thermique du support IZM-2 / zéolithe MFI / liant

Après mise en forme, le support du catalyseur mis en œuvre dans le procédé selon la présente invention est ensuite avantageusement soumis à une étape de séchage. Ladite étape de séchage est avantageusement effectuée par toute technique connue de l'homme du métier.

De préférence, le séchage est effectué sous flux d'air, ledit flux d'air pouvant être sec ou humide. Ledit séchage peut également être avantageusement effectué sous flux de tout gaz oxydant, réducteur ou inerte. De préférence, le séchage est avantageusement effectué entre 50°C et 180°C, de manière préférée entre 60°C et 150°C et de manière très préférée entre 80°C et 130°C. De préférence, ladite étape de séchage opère pendant une durée comprise entre 2h et 10h.

Ledit support, éventuellement séché, subit ensuite de préférence, une étape de calcination. Ladite étape de calcination est avantageusement réalisée en présence d'oxygène moléculaire, par exemple en effectuant un balayage d'air, l'air pouvant être sec ou humide, à une température avantageusement supérieure à 200°C et inférieure ou égale à 1100°C. Ladite étape de calcination peut avantageusement être effectuée en lit traverse, en lit léché ou en atmosphère statique. Par exemple, le four utilisé peut être un four rotatif tournant ou un four vertical à couches traversées radiales. La calcination peut avantageusement être opérée en présence de vapeur d'eau et/ou en présence d'une vapeur acide ou basique. Par exemple, la calcination peut être réalisée sous pression partielle d'ammoniaque. De préférence, ladite étape de calcination opère pendant une durée comprise entre 2h et 10h.

Des traitements post-calcination peuvent éventuellement être effectues, de manière à améliorer les propriétés du support, par exemple texturales.

### Traitement post-synthèse du support IZM-2 / zéolithe MFI / liant

Le support IZM-2 / zéolithe de code structural MFI / liant du catalyseur mis en œuvre dans le procédé selon la présente invention peut ainsi être éventuellement soumis à un traitement hydrothermal en atmosphère confinée. On entend par traitement hydrothermal en atmosphère confinée un traitement par passage à l'autoclave en présence d'eau à une température supérieure à la température ambiante.

Au cours de ce traitement hydrothermal, on peut avantageusement traiter le support. Ainsi, on peut avantageusement imprégner le support, préalablement à son passage à l'autoclave, l'autoclavage étant fait soit en phase vapeur, soit en phase liquide, cette phase vapeur ou liquide de l'autoclave pouvant être acide ou non. Cette imprégnation, préalable à l'autoclavage, peut avantageusement être acide ou non. Cette imprégnation, préalable à l'autoclavage peut avantageusement être effectuée à sec ou par immersion du support dans une solution aqueuse acide. Par imprégnation à sec, on entend mise en contact du support avec un volume de solution inférieur ou égal au volume poreux total du support. De préférence, l'imprégnation est réalisée à sec.

### Dépôt de la phase hydro-déshydrogénante

La phase hydro-déshydrogenante peut avantageusement être introduite à toute étape de la préparation, de manière très préférée après mise en forme dudit support IZM-2 / zéolithe de code structural MFI / liant.

La mise en forme est avantageusement suivie d'une calcination, la fonction hydro-déshydrogenante peut également avantageusement être introduite avant ou après cette calcination. Dans cette variante, la préparation se termine par une calcination à une température généralement comprise entre 250°C à 600°C.

Une autre des méthodes préférées selon la présente invention consiste avantageusement à mettre en forme le support IZM-2 / zéolithe MFI / liant après un malaxage de ce dernier, puis passage de la pâte ainsi obtenue au travers d'une filière pour former des extrudés. La fonction hydro-déshydrogenante peut avantageusement être alors introduite en partie seulement ou en totalité, au moment du malaxage.

D'une façon préférée, le support est imprégné par une solution aqueuse. L'imprégnation du support est de préférence effectuée par la méthode d'imprégnation dite "à sec" bien connue de l'homme du métier. L'imprégnation peut avantageusement être effectuée en une seule étape par une solution contenant l'ensemble des éléments constitutifs de la phase hydro-déshydrogénante.

La phase hydro-déshydrogenante peut avantageusement être introduite par une ou plusieurs opérations d'imprégnation du support mis en forme et calciné, par une solution contenant au moins un précurseur d'au moins un oxyde d'au moins un métal choisi dans le groupe formé par les éléments du groupes VIII et au moins un précurseur d'au moins un oxyde d'au moins un métal choisi dans le groupe formé par les éléments du groupe VIB. Lesdits précurseurs étant de préférence introduits en même temps. Dans la variante préférée où l'élément du groupe VIII est le nickel ou le cobalt, et les éléments du groupe VIB sont le molybdène ou le tungstène, les précurseurs utilisables dans le procédé de préparation du catalyseur sont par exemple le nitrate de nickel, le dihydroxyde de nickel, l'acétate de nickel, le carbonate de nickel, le nitrate de cobalt, le dihydroxyde de cobalt, l'acétate de cobalt, le carbonate de cobalt, l'heptamolybdate d'ammonium, l'acide molybdique, l'oxyde de molybdène, le métatungstate d'ammonium, l'acide tungstique ou l'oxyde de tungstène. Tout autre composé connu de l'homme du métier présentant une solubilité suffisante peut également être utilisé.

L'imprégnation des précurseurs des éléments choisis parmi les éléments du groupe VIII et les éléments du groupe VIB peut avantageusement être facilitée par ajout d'acide phosphorique dans les solutions aqueuses.

Les éléments suivants : bore et/ou silicium et/ou phosphore peuvent être introduits dans le catalyseur à tout niveau de la préparation et selon toute technique connue de l'homme du métier.

Une méthode préférée selon l'invention consiste à déposer le ou les éléments promoteurs choisis, par exemple le couple bore-silicium, sur le support IZM-2 / zéolithe MFI / liant mis en forme calciné ou non, de préférence calciné. Pour cela, on prépare une solution aqueuse d'au moins un sel de bore tel que le biborate d'ammonium ou le pentaborate d'ammonium en milieu alcalin et en présence d'eau oxygénée et on procède a une imprégnation dite à sec, dans laquelle on remplit le volume des pores du précurseur par la solution contenant par exemple le bore. Dans le cas où l'on dépose par exemple également du silicium, on utilise par exemple une solution d'un composé du silicium de type silicone ou émulsion d'huile silicone.

Le ou les élément(s) promoteur(s) choisi(s) dans le groupe forme par le silicium, le bore et le phosphore peuvent avantageusement être introduits par une ou plusieurs opérations d'imprégnation avec excès de solution sur le précurseur calciné. La source de bore peut avantageusement être l'acide borique, de préférence l'acide orthoborique H₃BO₃, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composes de la famille de la pyridine et des quinoléines et les composés de la famille du pyrrole. Le bore peut être introduit par exemple par une solution d'acide borique dans un mélange eau/alcool.

La source de phosphore préférée est l'acide orthophosphorique H₃PO₄ mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composes de la famille de la pyridine et des quinoléines et les composés de la famille du pyrrole.

De nombreuses sources de silicium peuvent avantageusement être employées. Ainsi, on peut utiliser l'orthosilicate d'éthyle Si(OEt)₄, les siloxanes, les polysiloxanes, les silicones, les émulsions de silicones, les silicates d'halogénures comme le fluorosilicate d'ammonium (NH₄)₂,SiF₆, ou le fluorosilicate de sodium Na₂SiF₆. L'acide silicomolybdique et ses sels, l'acide silicotungstique et ses sels peuvent également être avantageusement employés. Le silicium peut avantageusement être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Après imprégnation des éléments constitutifs de la phase hydro-déshydrogénante, le support ainsi rempli par la solution d'imprégnation peut éventuellement subir une étape de maturation à température ambiante, pendant une durée comprise entre 0,5h et 24h, de préférence entre 1h et 6h.

Après imprégnation, et une éventuelle étape de maturation, le solide obtenu subi une étape de séchage pendant une durée comprise entre 0,5h et 24h, de préférence entre 1h et 12h. De préférence, le séchage est effectué sous flux d'air, ledit flux d'air pouvant être sec ou humide. De préférence, le séchage est avantageusement effectué entre 50°C et 180°C, de manière préférée entre 60°C et 150°C.

Ledit solide séché, éventuellement maturé, subit ensuite éventuellement une étape de calcination pendant une durée comprise entre 0,5h et 24h, de préférence entre 1h et 12h. Ladite étape de calcination est avantageusement réalisée en présence d'oxygène moléculaire, par exemple en effectuant un balayage d'air, l'air pouvant être sec ou humide, à une température avantageusement comprise entre 200°C et 600°C, de manière préférée entre 300°C et 500°C.

La phase hydro-déshydrogénante du catalyseur utilisé dans le procédé selon l'invention est de préférence utilisée sous forme sulfurée. La sulfuration du catalyseur peut être effectuée in-situ ou ex-situ par toute méthode connue de l'homme du métier. Dans le cas d'une étape de sulfuration in-situ, le catalyseur est sulfuré par passage d'une charge contenant de l'H2S ou au moins un composé soufré, qui une fois décomposé conduit à la fixation de soufre sur la phase active. Cette charge peut être gazeuse ou liquide, par exemple de l'hydrogène contenant de l'H₂S, ou un liquide contenant au moins un composé soufré. Dans le cas d'une sulfuration ex-situ, un composé soufré peut être introduit sur le catalyseur en présence éventuellement d'un autre composé. Le catalyseur est ensuite séché, puis transféré dans le réacteur servant à mettre en œuvre le procédé selon l'invention. Dans ce réacteur, le catalyseur est alors traité sous hydrogène afin de transformer au moins une partie du métal principal en sulfure. Une procédure qui convient particulièrement à l'invention est celle décrite dans les brevets FR-B- 2 708 596 et FR-B- 2 708 597.

Le catalyseur utilisé dans le procédé selon l'invention peut avantageusement être utilisé en lits combinés avec un ou plusieurs catalyseurs d'hydrotraitement dans le cas où une étape d'hydrotraitement est mise en œuvre en amont du procédé de déparaffinage selon l'invention.

Les exemples qui suivent illustrent l'invention sans toutefois en limiter la portée.

### EXEMPLES

### Exemple 1 : Préparation des supports

La zéolithe ZSM-5 de code structural MFI est un solide commercial (Zeolyst ^{®}) sous forme NH₄ et de rapport atomique Si/Al de 25.

La zéolithe IZM-2 a été synthétisée conformément à l'enseignement de la demande de brevet FR 2 9128 050. La zéolithe brute de synthèse est soumise à une calcination à 550°C sous flux d'air sec durant 12 heures. La zéolithe IZM-2, après échange cationique, est sous forme acide et possède un rapport atomique Si/Al de 80.

Afin de préparer les supports de catalyseur, les zéolithes sont malaxées avec un liant de boehmite (Sasol ^{®}, Pural SB3). Les poudres de boehmite et de zéolithe sont mélangées à sec avant introduction dans la cuve de malaxage. Le malaxage est effectué en cuve fermée avec couvercle plein sur malaxeur à double bras en Z (Guittard^{®}) de type MX, avec une vitesse de rotation de 50 tr/min. De l'eau est introduite progressivement pour atteindre une PAF comprise entre 40-50%. Le passage en pâte s'effectue au bout de 3 à 15 min. La pâte malaxée est alors extrudée avec une extrudeuse piston au travers d'une filière de diamètre 3 mm. Les extrudés ainsi obtenus sont séchés (1 nuit à 120°C en étuve ventilée sous air) puis calcinés à 540°C durant 4 heures sous air sec. Les quantités de zéolithe IZM-2, ZSM-5 et de gel d'alumine sont ajustées de manière à obtenir les supports A à I présentés au tableau 1.

**Tableau 1 : Caractéristiques des supports**

| Supports | A | B | C | D | E | F | G | H | I |
|---|---|---|---|---|---|---|---|---|---|
| Teneur ZSM-5 (%pds) | 15 | 24 | 35 | 75 | 0 | 60 | 0 | 50 | 0 |
| Teneur IZM-2 (%pds) | 60 | 36 | 15 | 0 | 75 | 0 | 60 | 0 | 50 |
| Ratio massique IZM-2/ZSM-5 | 4,0 | 1,5 | 0,4 | n.a. | n.a. | n.a. | n.a. | n.a. | n.a. |
| Volume poreux (mL/g) | 0,35 | 0,43 | 0,49 | 0,33 | 0,34 | 0,42 | 0,42 | 0,49 | 0,48 |
| Surface spécifique (m²/g) | 370 | 350 | 336 | 373 | 376 | 352 | 357 | 335 | 339 |

| | | | | | | | | | |
|---|---|---|---|---|---|---|---|---|---|
| n.a. : non applicable | | | | | | | | | |

### Exemple 2 : Préparation des catalyseurs

Les supports A à I sous forme d'extrudés obtenus à l'exemple 1, sont imprégnés à sec avec une solution d'imprégnation préparée par dissolution à chaud d'oxyde de molybdène (MoO₃, Alfa Aesar ^{®}, 99,5%) et de dihydroxyde de nickel (Ni(OH)₂, Alfa Aesar ^{®}, 61% metal basis) dans une solution aqueuse d'acide phosphorique (H₃PO₄, Alfa Aesar ^{®}, 85% aqueus solution). Après imprégnation à sec, les extrudés sont laissés à maturer en atmosphère saturées en eau pendant 2 heures, puis ils sont séchés pendant 12 heures à 120°C et enfin calciné sous flux d'air sec à 450°C pendant 2 heures. Les quantités d'oxyde de molybdène, de dihydroxyde de nickel et d'acide phosphorique sont ajustées pour obtenir les teneurs suivantes en molybdène, nickel et phosphore sous forme oxyde sur les catalyseurs : 2,0% poids NiO, 7,0% poids MoO₃ et 2,5% poids P₂O₅. Les catalyseurs A à I, correspondant respectivement aux supports A à I sont ainsi obtenus.

### Exemple 3 : Mise en œuvre des catalyseurs dans un procédé de déparaffinage d'un gazole

Les catalyseurs A à I sont utilisés pour le déparaffinage d'un gazole de distillation atmosphérique ayant au préalable subi une étape d'hydrotraitement, dont les principales caractéristiques sont fournies dans le tableau 2.

**Tableau 2 : Caractéristiques du gazole de distillation atmosphérique hydrotraité**

| | |
|---|---|
| Teneur en soufre (ppm poids) | 7,5 |
| Teneur en azote (ppm poids) | < 5 |
| Point d'écoulement (°C) | 0,0 |
| Masse volumique à 15°C (g/mL) | 0,841 |
| Distillation simulée | |
| Point à 0,5% poids (°C) | 135 |
| Point à 5% poids (°C) | 190 |
| Point à 25% poids (°C) | 257 |
| Point à 50% poids (°C) | 297 |
| Point à 70% poids (°C) | 325 |
| Point à 99,5% poids (°C) | 428 |
| TMP (Température moyenne pondérée - °C) | 298 |

Le procédé de déparaffinage s'effectue dans un réacteur à lit fixe et à hydrogène perdu (pas de recyclage de l'hydrogène).

Les catalyseurs sont sulfuré in-situ dans le réacteur avant le test catalytique. Cette sulfuration s'effectue en présence d'hydrogène avec le gazole de distillation atmosphérique de sulfuration additivé de 2% en poids de diméthyldisulfure DMDS dans les conditions suivantes :
- une pression totale de 4 MPa,
- une vitesse volumique horaire (VVH) par rapport au gazole additivé de 2h⁻¹,
- un rapport H₂/Gazole additivé en entrée de réacteur de 300 normaux litres d'hydrogène par litre de gazole additivé.

Le traitement thermique effectué lors de cette étape de sulfuration est le suivant : après une heure à 150°C, la température est augmentée avec une rampe de 25°C/heure jusqu'à 220°C, puis avec une rampe de 12°C/heure jusqu'à atteindre un palier de 345°C, maintenu 12 heures.

Le gazole de distillation atmosphérique de test est additivé de 0,94% en poids de diméthyldisulfure DMDS et de 0,25% en poids d'aniline. Ces additifs se dégradent avant contact avec le catalyseur pour former respectivement les composés H₂S et NH₃. La dégradation totale de ces additifs est vérifiée lors du test.

Le gazole de distillation atmosphérique de test additivé est ensuite injecté pour démarrer le test de déparrafinage, les autres conditions restent inchangées, à savoir :
- une pression totale de 4 MPa,
- une vitesse volumique horaire (VVH) par rapport au gazole additivé de 2h⁻¹,
- un rapport H₂/Gazole additivé en entrée de réacteur de 300 normaux litres d'hydrogène par litre de gazole,
- une température de 345°C.

Les caractéristiques des effluents ainsi que les niveaux de pertes en coupe gazole obtenus au bout de 120h de test sont fournies dans le tableau 3. Les pertes en rendement en coupe 150°C⁺ peuvent être calculées à partir de la distillation simulée de l'effluent.

**Tableau 3 : Caractéristiques des effluents et pertes en rendement gazole**

| Catalyseur mis en œuvre | Point d'écoulement (°C) | Pertes en gazole (% poids) |
|---|---|---|
| A (conforme) | -15,0 | 7,0 |
| B (conforme) | -15,1 | 7,7 |
| C (conforme) | -15,2 | 8,4 |
| D (non-conforme) | -24,4 | 15,9 |
| E (non-conforme) | -8,8 | 5,0 |
| F (non-conforme) | -20,3 | 12,5 |
| G (non-conforme) | -7,3 | 4,5 |
| H (non-conforme) | -16,6 | 10,3 |
| I (non-conforme) | -5,9 | 4,1 |

On constate que la mise en œuvre des catalyseurs selon l'invention comprenant une zéolithe IZM-2 et une zéolithe de type structural MFI (ZSM-5) permettent de diminuer significativement le point d'écoulement de la charge gazole tout limitant les pertes en rendement de la coupe 150°C⁺.

En effet, à iso-teneur en zéolithe les catalyseurs conforme A, B et C sont plus sélectif que les catalyseurs non conformes D, F et H respectivement ne contenant qu'une zéolithe de code structural MFI et plus actif que le catalyseurs non conformes E, G et I respectivement ne contenant que la zéolithe IZM-2.

## Revendications

1. Procédé de déparaffinage d'une charge distillats moyens, mettant en œuvre dans un réacteur à lit fixe au moins un catalyseur comprenant au moins une phase hydro-deshydrogenante contenant au moins un métal du groupe VIB et au moins un métal du groupe VIII de la classification périodique des éléments, et un support comprenant au moins une zéolithe IZM-2, une zéolithe de code structural MFI et un liant, ledit procédé opérant à une température comprise entre 170 et 500°C, à une pression comprise entre 0,1 et 25 MPa, à une vitesse spatiale horaire comprise entre 0,05 et 50 h⁻¹ et en présence d'une quantité totale d'hydrogène mélangée à la charge telle que le ratio hydrogène/charge soit compris entre 50 et 2000 normaux litres d'hydrogène par normaux litre de charge.

2. Procédé selon la revendication 1 dans lequel ladite charge comprend au moins 95% poids de composés bouillants à une température d'ébullition comprise entre 150 et 400°C.

3. Procédé selon l'une des revendications 1 ou 2 dans lequel ladite charge est choisie parmi les charges issues de la distillation directe d'un pétrole brut, les charges issues d'une unité de cokéfaction, d'une unité de viscoréduction, d'une unité de vapocraquage et d'une unité de craquage catalytique, les charges issues d'une unité de transformation de la biomasse ou d'une huile d'origine végétale ou animale et les charges issues d'une unité de recyclage chimique, et notamment de pyrolyse, de déchets plastiques, prises seules ou en mélange.

4. Procédé selon l'une des revendications 1 à 3 dans lequel les éléments du groupe VIII sont choisis parmi le fer, le cobalt, le nickel, pris seul ou en mélange.

5. Procédé selon l'une des revendications 1 à 4 dans lequel les éléments du groupe VIB sont choisis parmi le tungstène et le molybdène, pris seuls ou en mélange.

6. Procédé selon l'une des revendications 1 à 5 dans lequel la teneur en métal du groupe VIII est comprise entre 0,5 et 10% en poids d'oxyde par rapport à la masse totale dudit catalyseur et la teneur en métal non noble du groupe VIB est comprise entre 1 et 40% en poids d'oxyde par rapport à la masse totale dudit catalyseur.

7. Procédé selon l'une des revendications 1 à 6 dans lequel ledit catalyseur contient une teneur en zéolithe totale (zéolithe IZM-2 et zéolithe de code structural MFI) comprise entre 5% et 90% en poids par rapport à la masse totale dudit catalyseur.

8. Procédé selon l'une des revendications 1 à 7 dans lequel ledit catalyseur comprend une teneur en liant comprise entre 10% et 95% poids, par rapport à la masse totale dudit catalyseur.

9. Procédé selon l'une des revendications 1 à 8 dans lequel la zéolithe de code structural MFI est la ZSM-5.

10. Procédé selon la revendication 9 dans lequel le ratio massique de la zéolithe IZM-2 sur la zéolithe ZSM-5 dans le support est compris entre 0,25 et 9.

11. Procédé selon l'une des revendications 1 à 10 dans lequel ledit procédé opère à une température comprise entre 250 et 440°C, à une pression comprise entre 1 et 20 MPa, à une vitesse spatiale horaire comprise entre 0,1 et 10 h⁻¹ et en présence d'une quantité totale d'hydrogène mélangée à la charge telle que le ratio hydrogène/charge soit compris entre 100 et 1500 litres d'hydrogène par litre de charge.

## Patentansprüche

1. Verfahren zur Entparaffinierung einer Mitteldestillat-Charge, wobei in einem Festbettreaktor mindestens ein Katalysator zum Einsatz gebracht wird, der mindestens eine hydrodehydrierende Phase, welche mindestens ein Metall aus der Gruppe VIB und mindestens ein Metall aus der Gruppe VIII des Periodensystems der Elemente enthält, sowie einen Träger umfasst, welcher mindestens einen IZM-2-Zeolith, einen Zeolith mit der Strukturkennung MFI und ein Bindemittel umfasst, wobei das Verfahren bei einer Temperatur im Bereich von 170 bis 500 °C, bei einem Druck im Bereich von 0,1 und 25 MPa, bei einer stundenbezogenen Raumgeschwindigkeit im Bereich von 0,05 bis 50 h⁻¹ und in Gegenwart einer Gesamtmenge an Wasserstoff betrieben wird, die mit der Charge derart vermischt wird, dass das Wasserstoff/Chargen-Verhältnis im Bereich von 50 bis 2000 Normlitern an Wasserstoff pro Normliter an Charge liegt.

2. Verfahren nach Anspruch 1, wobei die Charge mindestens 95 Gewichts-% an Verbindungen umfasst, die bei einer Siedetemperatur im Bereich von 150 bis 400 °C sieden.

3. Verfahren nach einem der Ansprüche 1 oder 2, wobei die Charge aus den Chargen, welche aus der Direktdestillation eines Rohöls stammen, den Chargen, welche aus einer Verkokungseinheit, einer Visbreaking-Einheit, einer Dampfcrackeinheit und einer katalytischen Crackeinheit stammen, den Chargen, welche aus einer Anlage zur Umwandlung von Biomasse oder Öl pflanzlichen oder tierischen Ursprungs stammen, und den Chargen ausgewählt ist, welche aus einer Anlage zum chemischen Recycling, insbesondere mittels Pyrolyse, von Kunststoffabfällen stammen, jeweils für sich genommen oder in Mischung.

4. Verfahren nach einem der Ansprüche 1 bis 3, wobei die Elemente der Gruppe VIII aus Eisen, Kobalt Nickel, für sich genommen oder in Mischung, ausgewählt sind.

5. Verfahren nach einem der Ansprüche 1 bis 4, wobei die Elemente der Gruppe VIB aus Wolfram und Molybdän, für sich genommen oder in Mischung, ausgewählt sind.

6. Verfahren nach einem der Ansprüche 1 bis 5, wobei der Gehalt an Metall der Gruppe VIII im Bereich von 0,5 bis 10 % Gewichts-% an Oxid, bezogen auf das Gesamtgewicht des Katalysators, liegt und der Gehalt an nicht-Edelmetall der Gruppe VIB im Bereich von 1 und 40 Gewichts-% an Oxid, bezogen auf die Gesamtmasse des Katalysators, liegt.

7. Katalysator nach einem der Ansprüche 1 bis 6, wobei der Katalysator einen Gesamtgehalt an Zeolith (Zeolith IZM-2 und Zeolith mit der Strukturkennung MFI) im Bereich von 5 bis 90 Gewichts-%, bezogen auf die Gesamtmasse des Katalysators, aufweist.

8. Katalysator nach einem der Ansprüche 1 bis 7, wobei der Katalysator einen Gehalt an Bindemittel im Bereich von 10 und 95 Gewichts-%, bezogen auf die Gesamtmasse des Katalysators, aufweist.

9. Verfahren nach einem der Ansprüche 1 bis 8, wobei es sich bei dem Zeolith mit der Strukturkennung MFI um ZSM-5 handelt.

10. Verfahren nach Anspruch 9, wobei das Massenverhältnis des Zeoliths ISM-2 zum Zeolith ZSM-5 in dem Träger im Bereich von 0,25 bis 9 liegt.

11. Verfahren nach einem der Ansprüche 1 bis 10, wobei das Verfahren bei einer Temperatur im Bereich von 250 bis 440 °C, bei einem Druck im Bereich von 1 und 20 MPa, bei einer stundenbezogenen Raumgeschwindigkeit im Bereich von 0,1 bis 10 h⁻¹ und in Gegenwart einer Gesamtmenge an Wasserstoff betrieben wird, welche derart mit der Charge vermischt wird, dass das Wasserstoff/Chargen-Verhältnis im Bereich von 100 bis 1500 Litern an Wasserstoff pro Liter an Charge liegt.

## Claims

1. Process for deparaffinning a middle distillate feedstock, using in a fixed-bed reactor at least one catalyst comprising at least one hydro-dehydrogenating phase containing at least one metal from group VIB and at least one metal from group VIII of the Periodic Table of the Elements, and a support comprising at least one IZM-2 zeolite, a zeolite of MFI framework type code and a binder, said process operating at a temperature of between 170 and 500°C, at a pressure of between 0.1 and 25 MPa, at an hourly space velocity of between 0.05 and 50 h⁻¹ and in the presence of a total amount of hydrogen mixed with the feedstock such that the hydrogen/feedstock ratio is between 50 and 2000 normal litres of hydrogen per normal litre of feedstock.

2. Process according to Claim 1, in which said feedstock comprises at least 95% by weight of compounds boiling at a boiling point of between 150 and 400°C.

3. Process according to either of Claims 1 and 2, in which said feedstock is chosen from feedstocks obtained from the direct distillation of a crude oil, feedstocks obtained from a coking unit, from a visbreaking unit, from a steam cracking unit and from a catalytic cracking unit, feedstocks obtained from a unit for transforming biomass or an oil of plant or animal origin and feedstocks obtained from a unit for the chemical recycling, and notably the pyrolysis, of plastic waste, taken alone or as a mixture.

4. Process according to one of Claims 1 to 3, in which the group VIII elements are chosen from iron, cobalt and nickel, taken alone or as a mixture.

5. Process according to one of Claims 1 to 4, in which the group VIB elements are chosen from tungsten and molybdenum, taken alone or as a mixture.

6. Process according to one of Claims 1 to 5, in which the content of group VIII metal is between 0.5% and 10% by weight of oxide relative to the total mass of said catalyst and the content of non-noble group VIB metal is between 1% and 40% by weight of oxide relative to the total mass of said catalyst.

7. Process according to one of Claims 1 to 6, in which said catalyst contains a total content of zeolite (IZM-2 zeolite and zeolite of MFI framework type code) of between 5% and 90% by weight relative to the total mass of said catalyst.

8. Process according to one of Claims 1 to 7, in which said catalyst comprises a content of binder of between 10% and 95% by weight relative to the total mass of said catalyst.

9. Process according to one of Claims 1 to 8, in which the zeolite of MFI framework type code is ZSM-5.

10. Process according to Claim 9, in which the mass ratio of IZM-2 zeolite to ZSM-5 zeolite in the support is between 0.25 and 9.

11. Process according to one of Claims 1 to 10, in which said process is performed at a temperature of between 250 and 440°C, at a pressure of between 1 and 20 MPa, at an hourly space velocity of between 0.1 and 10 h⁻¹ and in the presence of a total amount of hydrogen mixed with the feedstock such that the hydrogen/feedstock ratio is between 100 and 1500 litres of hydrogen per litre of feedstock.
